# EUROPEAN PATENT SPECIFICATION

(11) **EP 2 348 559 B1**
(45) Date of publication and mention of the grant of the patent: **06.06.2012**
(21) Application number: 10170381.7
(22) Date of filing: 22.07.2010
(51) Int. Cl.: H01M 2/04, H01M 2/08, H01M 2/12, H01M 2/34, H01M 10/42

(54) **Rechargeable battery**
Wiederaufladbare Batterie
Batterie rechargeable

(30) Priority: 26.01.2010 KR 20100007047
(43) Date of publication of application: 27.07.2011
(73) Proprietor: SB LiMotive Co., Ltd., Yongin-si Gyeonggi-do (KR)
(72) Inventor: Byun, Sang-Won, Gyeonggi-do (KR); Kim, Yong-Sam, Gyeonggi-do (KR); Choi, Soo-Seok, Gyeonggi-do (KR)
(74) Representative: Gulde Hengelhaupt Ziebig & Schneider

(56) References cited:
- JP-A- 2006 147 180
- US-B1- 6 342 826

## Description

### Field of the invention

Embodiments relate to a rechargeable battery.

### Description of the Related Art

Unlike a primary battery that is not rechargeable, a rechargeable battery is dischargeable and rechargeable. A low capacity battery having a battery cell packaged in the form of a pack is generally used for small, portable electronic devices such as a mobile phone or a camcorder. A large capacity battery having tens of battery packs interconnected is widely used as a power source for driving a motor of a hybrid vehicle and the like.

The rechargeable battery is formed in a variety of shapes such as a prismatic shape, a cylinder shape, and the like. The rechargeable battery typically includes an electrode assembly having positive and negative electrode plates and a separator between the positive and negative electrode plate, a case receiving the electrode assembly as well as electrolyte, and a cap assembly having electrode terminals and installed on the case.

Overcharging may excessively heat a rechargeable battery, or decomposition of electrolyte may increase an inner pressure of the rechargeable battery to cause a spark or explosion. Thus, a rechargeable battery having a structure for improving stability is desired.
US 6 342 826 B1 discloses a rechargeable battery comprising an electrode assembly, a case and a cap assembly. The cap assembly comprises a cap plate that seals the case, wherein the cap plate has an opening. The rechargeable battery further comprises a short circuit member having a first short circuit plate extending across the opening, and a second short circuit plate spaced from the cap plate and covering the opening. Between the first short circuit plate and the second short circuit plate a third short circuit plate is positioned.
JP 2006 147180 A discloses a secondary battery having an outer package can and a sealing cap group located at an opening of the package can and including a terminal plate. The secondary battery further comprises an inner package plate electrically connected to a lead member and a current breaking valve which breaks an electrical current path between the lead member and the terminal plate.

### SUMMARY

An aspect of the present invention provides a rechargeable battery that prevents or reduces the likelihood of melting due to contact between short circuit plates and that maintains a short circuit state caused by the contact so that a fuse part can continually function as a fuse.
According to at least one of the embodiments, a rechargeable battery includes an electrode assembly; a case housing the electrode assembly; a cap assembly comprising a cap plate that seals the case and has a short circuit opening; and a short circuit member comprising a first short circuit plate extending across the short circuit opening, a second short circuit plate spaced from the cap plate and covering the short circuit opening, and a third short circuit plate between the first and second short circuit plates, wherein the third short circuit plate is spaced from the second short circuit plate. More specifically, in one embodiment a first end of the third short circuit plate is coupled to the cap plate adjacent the short circuit opening, and a second end of the third short circuit plate is spaced from the cap plate. Further, in one embodiment, the third short circuit plate is configured to contact the second short circuit plate by movement of the first short circuit plate when an inner pressure of the rechargeable battery is greater than a set pressure.

In one embodiment, the first short circuit plate comprises a reversible plate that has a convex part protruding toward the electrode assembly and an edge part fixed to the cap plate. Additionally, a surface of the cap plate defining the short circuit opening may be stepped, and a diameter of the short circuit opening may increase in a direction away from the electrode assembly. In one embodiment, the surface of the cap plate has a first step, a second step and a third step in order in a direction away from the electrode assembly, wherein the first short circuit plate is fixed to the first step, and wherein the third short circuit plate is fixed to the second step.

In one embodiment, the rechargeable battery may also include an upper insulating member located between the second short circuit plate and the cap plate, wherein the upper insulating member has an opening generally corresponding to the short circuit opening. Further, the second short circuit plate may have a flat surface facing the third short circuit plate, and the third short circuit plate may have a chamfer adapted to contact the second short circuit plate.

Additionally, in one embodiment, the second short circuit plate includes an opening; and a protrusion extending towards the third short circuit plate and protruding from a periphery of the opening.

### BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain principles of the present disclosure. In the drawings:

FIG. 1 is a perspective view illustrating a rechargeable battery according to an embodiment;

FIG. 2 is a cross-sectional view taken along line I-I' of FIG. 1;

FIG. 3A is a detailed cross-sectional view illustrating portion A of FIG. 2;

FIG. 3B is a cross-sectional view illustrating a case in which a third short circuit plate of FIG. 3A contacts a second short circuit plate of FIG. 3A;

FIG. 4A is a detailed cross-sectional view illustrating a portion generally corresponding to the portion A of FIG. 2 in a rechargeable battery according to another embodiment;

FIG. 4B is a cross-sectional view illustrating a case in which a third short circuit plate of FIG. 4A contacts a second short circuit plate of FIG. 4A;

FIG. 5A is an enlarged cross-sectional view illustrating a portion corresponding to the portion A of FIG. 2 in a rechargeable battery according to another embodiment;

FIG. 5B is a cross-sectional view illustrating a case in which a third short circuit plate of FIG. 5A contacts a second short circuit plate of FIG. 5A;

FIG. 6A is an enlarged cross-sectional view illustrating a portion corresponding to the portion A of FIG. 2 in a rechargeable battery according to another embodiment; and

FIG. 6B is a cross-sectional view illustrating a case in which a third short circuit plate of FIG. 6A contacts a second short circuit plate of FIG. 6A.

### DETAILED DESCRIPTION

In the following detailed description, only certain exemplary embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive.

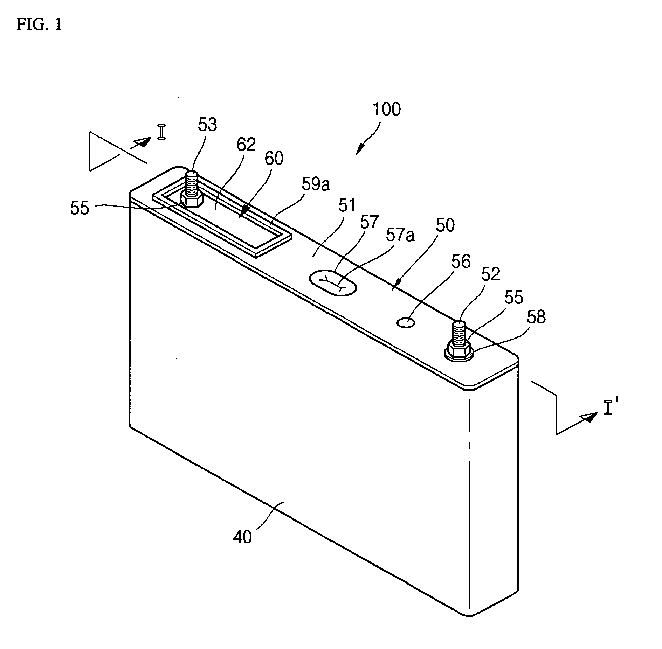

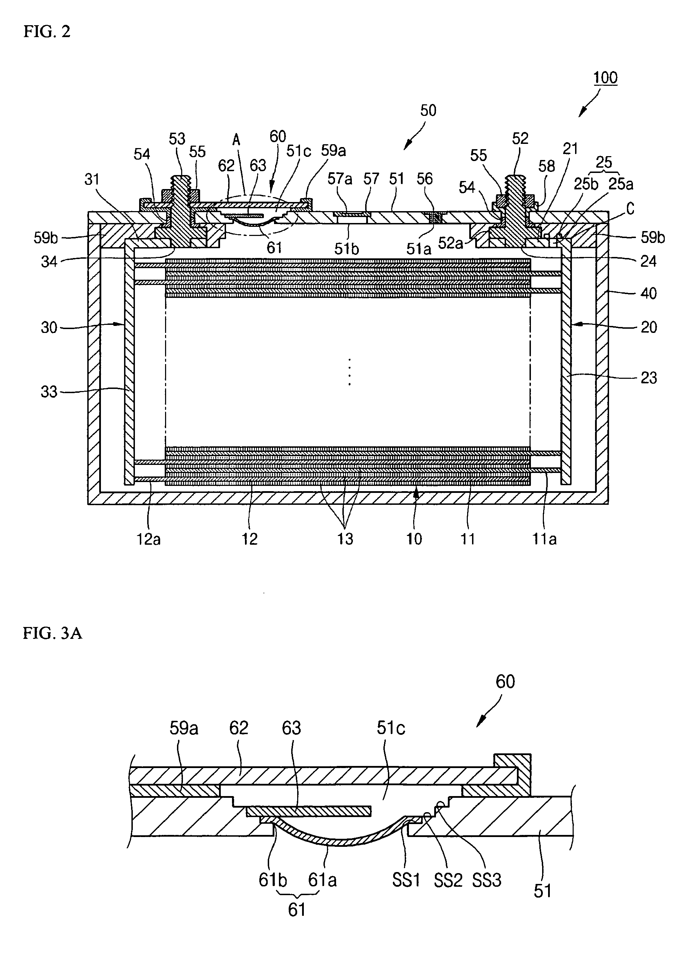

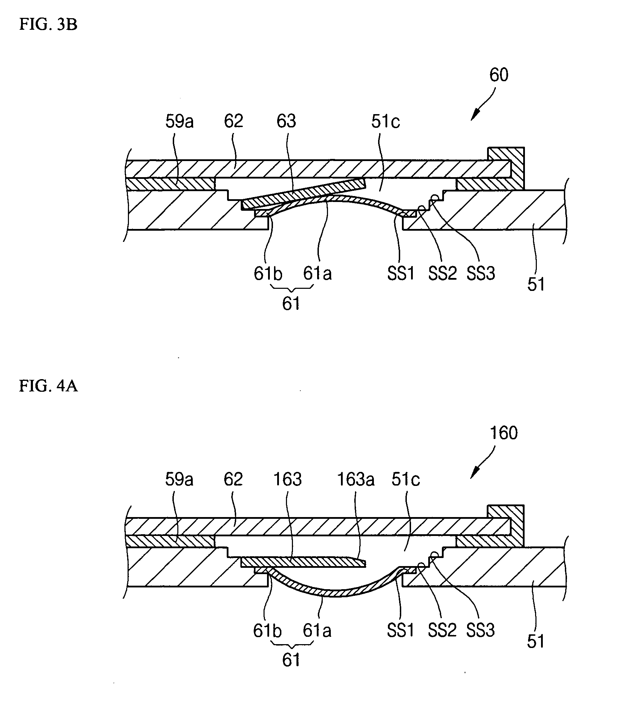

Hereinafter, embodiments will be described in detail with reference to the accompanying drawings. FIG. 1 is a perspective view illustrating a rechargeable battery according to an embodiment. FIG. 2 is a cross-sectional view taken along line I-I' of FIG. 1. FIG. 3A is an enlarged cross-sectional view illustrating a portion A of FIG. 2. FIG. 3B is a cross-sectional view illustrating a case in which a third short circuit plate of FIG. 3A contacts a second short circuit plate of FIG. 3A.

Referring to FIGS. 1 and 2, a rechargeable battery 100 according to the current embodiment includes an electrode assembly 10, a first collecting plate 20, a second collecting plate 30, a case 40, a cap assembly 50, and a short circuit member 60.

The electrode assembly 10 is formed by winding or stacking a first electrode plate 11, a separator 13, and a second electrode plate 12, which have thin plate shapes or film shapes. The first electrode plate 11 may function as a positive electrode, and the second electrode plate 12 may function as a negative electrode.

The first electrode plate 11 is formed by applying first electrode active materials such as transition metal oxide on a first electrode collector formed of metal foil such as aluminum foil, and includes first electrode non-coating portions 11 a on which the first electrode active materials are not applied. The first electrode non-coating portions 11 a function as passages for current flow between the first electrode plate 11 and the outside of the first electrode plate 11. The material of the first electrode plate 11 is not limited to those disclosed by the present disclosure.

The second electrode plate 12 is formed by applying second electrode active materials such as graphite or carbon on a second electrode collector formed of metal foil such as nickel or copper foil, and includes second electrode non-coating portions 12a on which the second electrode active materials are not applied. The second electrode non-coating portions 12a function as passages through which a current flows between the second electrode plate 12 and the outside of the second electrode plate 12. The material of the second electrode plate 12 is not limited to those disclosed by the scope of the present disclosure.

The polarity of the first electrode plate 11 and the polarity of the second electrode plate 12 may be interchanged with each other.

The separator 13 is located between the first electrode plate 11 and the second electrode plate 12 to prevent a short circuit and to allow lithium ions to move, and is formed as a film of one of polyethylene, polypropylene, a combination thereof. However, the material of the separator 13 is not limited to those disclosed by the present disclosure.

Both ends of the electrode assembly 10 are connected with the first collecting plate 20 and the second collecting plate 30 that are respectively connected to the first electrode plate 11 and the second electrode plate 12.

The first collecting plate 20 is formed of a conductive material such as aluminum, and is in contact with the first electrode non-coating portions 11 a protruding from one end of the electrode assembly 10, so that the first collecting plate 20 is electrically coupled to the first electrode plate 11. Referring to FIG. 2, the first collecting plate 20 may include a first connection part 21, a first extension part 23, a first terminal hole 24, and a first fuse part 25.

The first connection part 21 is installed between the upper part of the electrode assembly 10 and the lower part of the cap assembly 50, and is formed in a plate shape.

The first extension part 23 is bent at angle and extends from an end of the first connection part 21, and is formed in a plate shape that is substantially in contact with the first electrode non-coating portions 11 a. A corner where the first connection part 21 meets the first extension part 23 is denoted by 'C', and the first connection part 21 may be substantially perpendicular to the first extension part 23 at the corner C.

The first terminal hole 24 is located at a side of the first connection part 21, and provides the first connection part 21 with a space into which a first electrode terminal 52 of the cap assembly 50 is fitted and coupled. The first terminal hole 24 is at a portion of the first connection part 21 which is spaced from the corner C.

The first fuse part 25 is located on the first connection part 21 on the upper side of the electrode assembly 10 such that the first fuse part 25 does not contact electrolyte. In addition, the first fuse part 25 is located in a region of the first connection part 21 adjacent to the corner C such that the first fuse part 25 does not overlap the first electrode terminal 52 coupled to the first terminal hole 24. In one embodiment, the first fuse part 25 includes a first fuse hole 25a and a first reinforcement protrusion 25b protruding from a periphery of the first fuse hole 25a. When a short circuit occurs in the rechargeable battery 100, a large current flows in the rechargeable battery 100 and heat is generated, which may melt the region where the first fuse hole 25a is located to allow the first fuse hole 25a to function as a fuse to shut off a current flow. The first reinforcement protrusion 25b reinforces the region where the first fuse hole 25a is located against external shock during operation of the battery.

The second collecting plate 30 is formed of a conductive material such as nickel, and is in contact with the second electrode non-coating portions 12a protruding from another end of the electrode assembly 10, so that the second collecting plate 30 is electrically coupled to the second electrode plate 12. The second collecting plate 30 may include a second connection part 31, a second extension part 33, and a second terminal hole 34.

Since the second connection part 31, the second extension part 33, and the second terminal hole 34 of the second collecting plate 30 are substantially the same shape and serve substantially the same function as the first connection part 21, the first extension part 23, and the first terminal hole 24 of the first collecting plate 20 as illustrated in FIG. 2, descriptions thereof will be omitted.

The case 40 is formed of conductive metal such as steel plated with aluminum, aluminum alloy, or nickel, and has an approximately hexahedron shape provided with an opening part through which the electrode assembly 10, the first collecting plate 20, and the second collecting plate 30 can be inserted and placed. Since FIG. 2 illustrates the case 40 coupled to the cap assembly 50, the opening part is not shown, but the edge of the case 40 corresponding to the cap assembly 50 is substantially open. The inner surface of the case 40 is electrically insulated from the electrode assembly 10, the first collecting plate 20, the second collecting plate 30, and the cap assembly 50. In this case, the case 40 may function as a pole, e.g., a positive pole.

The cap assembly 50 is coupled to the case 40. In detail, the cap assembly 50 may include a cap plate 51, the first electrode terminal 52, the second electrode terminal 53, gaskets 54, and nuts 55. The cap assembly 50 may further include a cap 56, a vent plate 57, a connection plate 58, an upper insulating member 59a, and lower insulating members 59b.

The cap plate 51 seals an opening of the case 40, and may be formed of the same material as the case 40. The cap plate 51 may include an electrolyte injection hole 51 a, a vent hole 51 b, and a short circuit opening 51 c. A side surface of the short circuit opening 51 c may be stepped, and the diameter of the short circuit opening 51 c may increase from the lower side to the upper side. Accordingly, the side surface of the short circuit opening 51 c may include a first step SS1, a second step SS2, and a third step SS3. The cap plate 51 may have the same polarity as that of the case 40.

The first electrode terminal 52 passes through a side of the cap plate 51, and is electrically coupled to the first collecting plate 20. The first electrode terminal 52 may have a column shape. The outer circumferential edge of an upper portion of the column shape exposed to the upper side of the cap plate 51 is provided with a screw thread. The lower portion of the column shape at the lower side of the cap plate 51 is provided with a flange 52a to prevent the first electrode terminal 52 from being separated from the cap plate 51. A portion of the column shape of the first electrode terminal 52 at the lower side of the flange 52a is fitted into the first terminal hole 24 of the first collecting plate 20. The first electrode terminal 52 may be electrically coupled to the cap plate 51.

The second electrode terminal 53 passes through another side of the cap plate 51, and is electrically coupled to the second collecting plate 30. Since the second electrode terminal 53 has the same shape as that of the first electrode terminal 52, a description thereof will be omitted. However, the second electrode terminal 53 is electrically insulated from the cap plate 51.

The gasket 54 is formed of an insulating material, and is located between the cap plate 51 and each of the first electrode terminal 52 and the second electrode terminal 53 to seal the space between the cap plate 51 and each of the first electrode terminal 52 and the second electrode terminal 53. The gaskets 54 prevent moisture from entering the rechargeable battery 100 and prevent electrolyte stored in the rechargeable battery 100 from leaking to the outside.

The nuts 55 are coupled along the screw threads provided respectively to the first electrode terminal 52 and the second electrode terminal 53, to respectively fix the first electrode terminal 52 and the second electrode terminal 53 to the cap plate 51.

The cap 56 seals the electrolyte injection hole 51 a of the cap plate 51. The vent plate 57 is installed in the vent hole 51 b of the cap plate 51, and includes a notch 57a to be opened at a set pressure.

The connection plate 58 is configured such that the first electrode terminal 52 is fitted between the first electrode terminal 52 and the cap plate 51, and is coupled to the cap plate 51 and the gasket 54 through the nut 55. The connection plate 58 electrically couples the first electrode terminal 52 to the cap plate 51.

The upper insulating member 59a configured such that the second electrode terminal 53 is fitted between the second electrode terminal 53 and the cap plate 51, and is proximate to the cap plate 51 and the gasket 54. The upper insulating member 59a insulates the second electrode terminal 53 and the cap plate 51.

The lower insulating member 59b is located between the cap plate 51 and each of the first collecting plate 20 and the second collecting plate 30 to prevent an unnecessary short circuit.

The short circuit member 60 is installed on the upper side of the cap assembly 50. When an inner pressure of the rechargeable battery 100 is greater than a set pressure caused by, for example, overcharging, the short circuit member 60 induces a short circuit such that the first fuse part 25 shuts off a current flow. The short circuit member 60 includes a first short circuit plate 61, a second short circuit plate 62, and a third short circuit plate 63, which are formed of a conductive material.

Referring to FIG. 3A, the first short circuit plate 61 is installed in the short circuit opening 51 c of the cap plate 51. The first short circuit plate 61 is formed as a reversible or deformable plate that includes a convex part 61 a protruding downward generally towards an interior of the case 40 and an edge part 61 b fixed to the side surface of the short circuit opening 51 c, that is, to the first step SS1. The first short circuit plate 61 is electrically coupled to the cap plate 51. When an inner pressure of the rechargeable battery 100 is greater than a set pressure, the first short circuit plate 61 may be reversed or deformed to be convex upward, protruding generally away from an interior of the case 40. The first short circuit plate 61 may be formed of aluminum, but the present disclosure is not limited thereto. The first short circuit plate 61 may have a thickness between about 0.4 mm to about 0.6 mm, but the present disclosure is not limited thereto.

The second short circuit plate 62 is located on an exterior of the cap plate 51 and spaced from the cap plate 51, and the second electrode terminal 53 is fitted into the second short circuit plate 62. The second short circuit plate 62 extends to cover the short circuit opening 51 c. The second short circuit plate 62 is electrically coupled to the second electrode terminal 53. The second short circuit plate 62 has generally flat upper and lower surfaces, and is formed of copper, but the present disclosure is not limited thereto. The second short circuit plate 62 may have a thickness of about 1 mm or greater, but the present disclosure is not limited thereto.

The third short circuit plate 63 is spaced from the second short circuit plate 62 and is located between the first short circuit plate 61 and the second short circuit plate 62. The third short circuit plate 63 has flat upper and lower surfaces. Referring to FIG. 3B, via the convex part 61a that reverses to protrude upward when the inner pressure of the rechargeable battery 100 is greater than a set pressure, the third short circuit plate 63 is brought into contact with the second short circuit plate 62 to cause a short circuit. When the short circuit occurs, a large current flows, and heat is generated, causing the first fuse part 25 to function as a fuse, thereby improving the stability of the rechargeable battery 100. The third short circuit plate 63 may be in linear contact with the second short circuit plate 62.

In one embodiment, to contact the second short circuit plate 62, the third short circuit plate 63 has a first side connected to a first side of the short circuit opening 51 c, and a second side spaced from a second side of the short circuit opening 51 c. That is, a first end of the third short circuit plate 63 is fixed to the second step SS2, and a second end of the third short circuit plate 63 is spaced from the second step surface SS2 such that the second side of the third short circuit plate 63 is movable upward generally away from the electrode assembly. The third short circuit plate 63 may be electrically coupled to the cap plate 51, and may be formed of aluminum, but the present disclosure is not limited thereto.

The third short circuit plate 63 may have a greater thickness than the first short circuit plate 61, for example, a thickness ranging from about 0.7 mm to about 0.8 mm. Instead of the first short circuit plate 61 having a small thickness, the third short circuit plate 63 may contact the second short circuit plate 62 to cause a short circuit. Accordingly, the third short circuit plate 63 substantially prevents the first short circuit plate 61 from being melted before the first fuse part 25 functions as a fuse when the first short circuit plate 61 contacts the second short circuit plate 62 to cause a short circuit. Thus, when the rechargeable battery 100 is overcharged, and an inner pressure of the rechargeable battery 100 is greater than a set pressure, the third short circuit plate 63 maintains a short circuit so that the first fuse part 25 can function as a fuse.

As described above, the rechargeable battery 100 includes the third short circuit plate 63 thicker than the first short circuit plate 61 between the first short circuit plate 61 and the second short circuit plate 62 to prevent melting of the first short circuit plate 61 due to contact between the second short circuit plate 62 and the thin first short circuit plate 61.

Thus, when an inner pressure of the rechargeable battery 100 is greater than a set pressure by a state such as overcharge, the rechargeable battery 100 maintains a short circuit caused by contact of the second short circuit plate 62 with the third short circuit plate 63, so that the first fuse part 25 can continually function as a fuse.

Hereinafter, a rechargeable battery will now be described according to another embodiment.

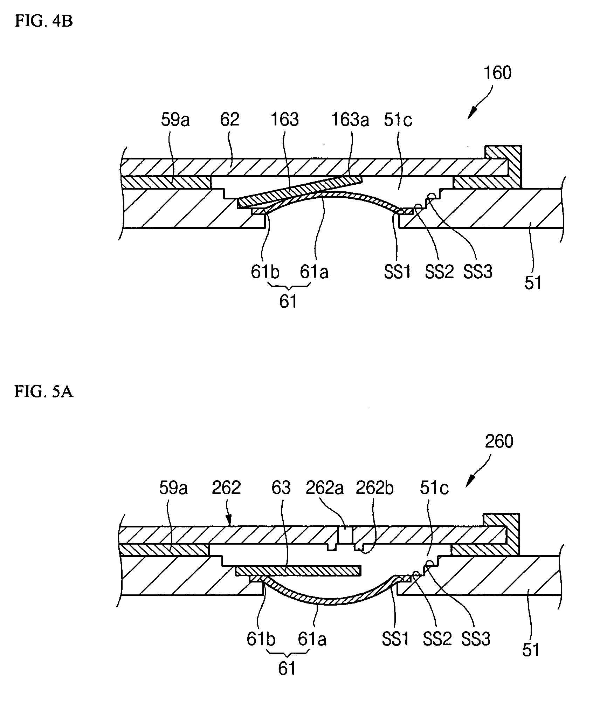

FIG. 4A is an enlarged cross-sectional view illustrating a portion corresponding to the portion A of FIG. 2 in the rechargeable battery according to the current embodiment. FIG. 4B is a cross-sectional view illustrating a case in which a third short circuit plate of FIG. 4A contacts a second short circuit plate of FIG. 4A.

The rechargeable battery according to the current embodiment is the same in configurations and functions as the rechargeable battery 100 illustrated in FIG. 2 except for a configuration of a third short circuit plate 163 of a short circuit member 160. Thus, illustrations and descriptions of the same configurations will be omitted, and the third short circuit plate 163 will be principally described.

Referring to FIG. 4A, the short circuit member 160 of the rechargeable battery according to the current embodiment includes the first short circuit plate 61, the second short circuit plate 62, and the third short circuit plate 163, which are formed of conductive material.

The third short circuit plate 163 is similar to the third short circuit plate 63 as illustrated in FIG. 3A. However, the third short circuit plate 163 includes a chamfer 163a formed by cutting a side of a surface facing the second short circuit plate 62. Referring to FIG. 4B, when the third short circuit plate 163 is moved upward by the first short circuit plate 61, the third short circuit plate 163 is in surface contact with the second short circuit plate 62 to reduce resistance due to the contact between the third short circuit plate 163 and the second short circuit plate 62.

As described above, the rechargeable battery according to the current embodiment includes the third short circuit plate 163 having the chamfer 163a to suppress the case in which the portion where the third short circuit plate 163 contacts the second short circuit plate 62 is melted by the first short circuit plate 61 that protrudes upward when the rechargeable battery 100 is overcharged and its inner pressure is greater than a set pressure.

Hereinafter, a rechargeable battery will now be described according to another embodiment.

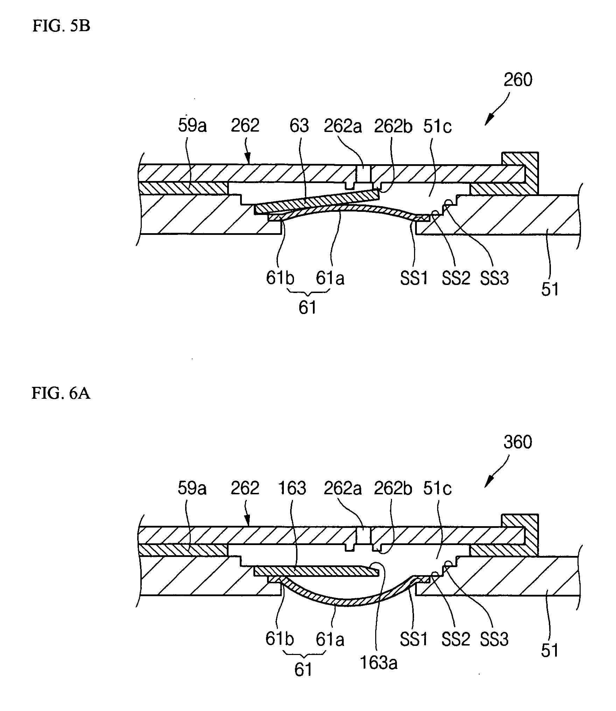

FIG. 5A is an enlarged cross-sectional view illustrating a portion corresponding to the portion A of FIG. 2 in the rechargeable battery according to the current embodiment. FIG. 5B is a cross-sectional view illustrating a case in which a third short circuit plate of FIG. 5A contacts a second short circuit plate of FIG. 5A.

The rechargeable battery according to the current embodiment is substantially the same in configuration and function as the rechargeable battery 100 illustrated in FIG. 2 except for a configuration of a second short circuit plate 262 of a short circuit member 260. Thus, illustrations and descriptions of components with the same configuration will be omitted, and the second short circuit plate 262 will be primarily described.

Referring to FIG. 5A, the short circuit member 260 of the rechargeable battery according to the current embodiment includes the first short circuit plate 61, the second short circuit plate 262, and the third short circuit plate 63, which are formed of a conductive material.

The second short circuit plate 262 is similar to the second short circuit plate 62 illustrated in FIG. 3A. However, the second short circuit plate 262 includes an opening 262a and a protrusion 262b.

When the second short circuit plate 262 contacts the third short circuit plate 63 to form a short circuit, the opening 262a allows for a constant current flow. That is, since resistance is large in a contact region between the second short circuit plate 262 and the third short circuit plate 63, the opening 262a minimizes the resistance variation in the contact region between the second short circuit plate 262 and the third short circuit plate 63, with respect to the other regions.

The protrusion 262b is located on a surface facing the third short circuit plate 63, and protrudes from a periphery of the opening 262a. The protrusion 262b reduces the distance between the second short circuit plate 262 and the third short circuit plate 63, so that the first short circuit plate 61 can more reliably ensure that the third short circuit plate 63 sufficiently contacts the second short circuit plate 262.

As described above, the rechargeable battery according to the current embodiment includes the second short circuit plate 262 having the opening 262a and the protrusion 262b to facilitate a short circuit due to the contact between the second short circuit plate 262 and the third short circuit plate 63 by the first short circuit plate 61 that is reversed or deformed upward when the rechargeable battery 100 is overcharged and its inner pressure is greater than a set pressure.

Hereinafter, a rechargeable battery will now be described according to another embodiment.

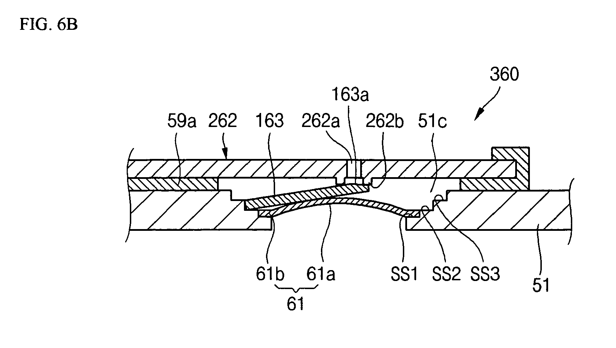

FIG. 6A is an enlarged cross-sectional view illustrating a portion corresponding to the portion A of FIG. 2 in the rechargeable battery according to the current embodiment. FIG. 6B is a cross-sectional view illustrating a case in which a third short circuit plate of FIG. 6A contacts a second short circuit plate of FIG. 6A.

The rechargeable battery according to the current embodiment is substantially the same in configuration and function as the rechargeable battery 100 illustrated in FIG. 2 except for the configuration of the second short circuit plate 262 and the third short circuit plate 163 of a short circuit member 360. Thus, illustrations and descriptions of the components with the same configuration will be omitted, and the second short circuit plate 262 and the third short circuit plate 163 will be primarily described.

Referring to FIG. 6A, the short circuit member 360 of the rechargeable battery according to the current embodiment includes the first short circuit plate 61, the second short circuit plate 262, and the third short circuit plate 163, which are formed of conductive material.

The second short circuit plate 262 is similar to the second short circuit plate 62 illustrated in FIG. 3A. However, the second short circuit plate 262 includes the opening 262a and the protrusion 262b. Since the second short circuit plate 262 is described in FIG. 5A, the description is omitted in the current embodiment.

The third short circuit plate 163 is similar to the third short circuit plate 63 as illustrated in FIG. 3A. However, the third short circuit plate 163 includes the chamfer 163a formed by cutting a side of the surface facing the second short circuit plate 262. Since the third short circuit plate 163 is described in FIG. 4A, the description is omitted in the current embodiment.

As described above, the rechargeable battery according to the current embodiment includes the second short circuit plate 262 having the opening 262a and the protrusion 262b, and the third short circuit plate 163 having the chamfer 163a, to reduce the likelihood that when the third short circuit plate 163 contacts the second short circuit plate 262, the third short circuit plate is melted by the first short circuit plate 61 that reverses to protrude upward when the rechargeable battery 100 is overcharged and its inner pressure is greater than a set pressure, and simultaneously, to facilitate a short circuit due to the contact between the second short circuit plate 262 and the third short circuit plate 163.

The rechargeable battery according to the current embodiments includes the third short circuit plate thicker than the first short circuit plate between the first short circuit plate and the second short circuit plate to prevent melting of the first short circuit plate when the second short circuit plate contacts the thin first short circuit plate.

Accordingly, when an inner pressure of the rechargeable battery is greater than a set pressure by a state such as overcharge, the rechargeable battery maintains a short circuit state caused by contact of the second short circuit plate with the third short circuit plate, so that the fuse part can continually function as a fuse.

Exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present disclosure as set forth in the following claims.

## Claims

1. A rechargeable battery (100) comprising:
an electrode assembly (10);
a case (40) housing the electrode assembly (10);
a cap assembly (50) comprising a cap plate (51) that seals the case (40) and has an opening (51 c); and
a short circuit member (60) comprising a first short circuit plate (61) extending across the opening (51 c), a second short circuit plate (62) spaced from the cap plate (51) and covering the opening (51c), and a third short circuit plate (63) between the first short circuit plate (61) and the second short circuit plate (62),
wherein the third short circuit plate (63) is spaced apart from the second short circuit plate (62).

2. The rechargeable battery as claimed in claim 1, wherein a first end of the third short circuit plate (63) is coupled to the cap plate (51) proximate the opening **(51c),** and wherein a second end of the third short circuit plate (63) is spaced from the cap plate (51).

3. The rechargeable battery as claimed in one of the previous claims, wherein the third short circuit plate (63) is configured to contact the second short circuit plate (62) due to movement of the first short circuit plate (61) when an inner pressure of the rechargeable battery is greater than a set pressure.

4. The rechargeable battery as claimed in one of the previous claims, wherein the first short circuit plate (61) comprises a reversible plate (61 a) that has a convex part protruding toward the electrode assembly (10) and an edge part (61 b) fixed to the cap plate (51).

5. The rechargeable battery as claimed in one of the previous claims, wherein a surface of the cap plate (51) defining the opening (51 c) is stepped, and a diameter of the opening (51c) increases in a direction away from the electrode assembly (10).

6. The rechargeable battery as claimed in claim 5, wherein the surface of the cap plate (51) has a first step (SS1), a second step (SS2) and a third step (SS3) in order in a direction away from the electrode assembly (10), wherein the first short circuit plate (61) is fixed to the first step (SS1), and wherein the third short circuit plate (63) is fixed to the second step (SS2).

7. The rechargeable battery as claimed in one of the previous claims, further comprising an upper insulating member (59a) located between the-second short circuit plate (62) and the cap plate (51), wherein the upper insulating member (59a) has an opening generally corresponding in its location to the opening **(51c)** on the cap plate (51).

8. The rechargeable battery as claimed in one of the previous claims, wherein the second short circuit plate (62) and the third short circuit plate (63) have flat surfaces that face each other.

9. The rechargeable battery as claimed in claim 8, wherein the third short circuit plate (63) is configured to contact the second short circuit plate (62) due to movement of the first short circuit plate (61) when an inner pressure of the rechargeable battery is greater than a set pressure.

10. The rechargeable battery as claimed in one of the previous claims, wherein the-second short-circuit plate (262) includes:
an opening (262a); and
a protrusion (262b) extending towards the third short circuit plate (63) and protruding from a periphery of the opening (262a).

11. The rechargeable battery as claimed in claim 10, wherein the third short circuit plate (63) has a flat surface facing the second short circuit plate (62).

12. The rechargeable battery as claimed in one of claims 1 to 10, wherein the third short circuit plate (163) has a chamfer (163a) adapted to contact the second short circuit plate (62, 262).

13. The rechargeable battery as claimed in claim 11 or 12, wherein the protrusion (262b) of the second short circuit plate (262) is configured to contact the third short circuit plate (63) or the chamfer (163a) of the third short circuit plate (163) due to movement of the first short circuit plate (61) when an inner pressure of the rechargeable battery is greater than a set pressure.

14. The rechargeable battery as claimed in one of the previous claims, wherein the third short circuit plate (63, 163) has a thickness that is greater than a thickness of the first short circuit plate (61).

## Patentansprüche

1. Wiederaufladbare Batterie (100), umfassend
eine Elektrodenanordnung (10);
ein die Elektrodenanordnung (10) aufnehmendes Gehäuse (40);
eine Deckelanordnung (50) umfassend eine Abdeckplatte (51), die das Gehäuse (40) verschließt und eine Öffnung (51c) aufweist; und
ein Kurzschlusselement (60) umfassend eine erste Kurzschlussplatte (61), die sich über die Öffnung (51c) erstreckt, eine zweite Kurzschlussplatte (62), die von derAbdeckplatte (51) beabstandet ist und die Öffnung (51c) bedeckt, sowie eine dritte Kurzschlussplatte (63) zwischen der ersten Kurzschlussplatte (61) und der zweiten Kurzschlussplatte (62),
wobei die dritte Kurzschlussplatte (63) von der zweiten Kurzschlussplatte (62) beabstandet ist.

2. Wiederaufladbare Batterie nach Anspruch 1, wobei ein erstes Ende der dritten Kurzschlussplatte (63) mit der Abdeckplatte (51) nahe der Öffnung (51c) verbunden ist, und wobei ein zweites Ende der dritten Kurzschlussplatte (63) von der Abdeckplatte (51) beabstandet ist.

3. Wiederaufladbare Batterie nach einem der vorstehenden Ansprüche, wobei die dritte Kurzschlussplatte (63) zum Kontaktieren der zweiten Kurzschlussplatte (62) aufgrund einer Bewegung der ersten Kurzschlussplatte (61), wenn ein Innendruck der wiederaufladbaren Batterie größer ist als ein bestimmter Druck, ausgebildet ist.

4. Wiederaufladbare Batterie nach einem der vorstehenden Ansprüche, wobei die erste Kurzschlussplatte (61) eine umkehrbare Platte (61a) umfasst, die einen zur Elektrodenanordnung (10) vorstehenden konvexen Abschnitt sowie einen an der Abdeckplatte (51) befestigten Randabschnitt (61b) aufweist.

5. Wiederaufladbare Batterie nach einem der vorstehenden Ansprüche, wobei eine die Öffnung (51c) definierende Fläche der Abdeckplatte (51) abgestuft ist und ein Durchmesser der Öffnung (51c) in eine von der Elektrodenanordnung (10) weg weisende Richtung zunimmt.

6. Wiederaufladbare Batterie nach Anspruch 5, wobei die Fläche der Abdeckplatte (51) eine erste Stufe (SS1), eine zweite Stufe (SS2) und eine dritte Stufe (SS3) in von der Elektrodenanordnung (10) weg weisender Reihenfolge aufweist, wobei die erste Kurzschlussplatte (61) an der ersten Stufe (SS1) befestigt ist, und wobei die dritte Kurzschlussplatte (63) an der zweiten Stufe (SS2) befestigt ist.

7. Wiederaufladbare Batterie nach einem der vorstehenden Ansprüche, ferner umfassend ein sich zwischen der zweiten Kurzschlussplatte (62) und der Abdeckplatte (51) befindendes oberes Isolierelement (59a), wobei das obere Isolierelement (59a) eine Öffnung aufweist, die hinsichtlich ihrer Position im Allgemeinen der Öffnung (51c) in der Abdeckplatte (51) entspricht.

8. Wiederaufladbare Batterie nach einem der vorstehenden Ansprüche, wobei die zweite Kurzschlussplatte (62) und die dritte Kurzschlussplatte (63) flache, einander zugewandte Flächen aufweisen.

9. Wiederaufladbare Batterie nach Anspruch 8, wobei die dritte Kurzschlussplatte (63) zum Kontaktieren der zweiten Kurzschlussplatte (62) aufgrund einer Bewegung der ersten Kurzschlussplatte (61), wenn ein Innendruck der wiederaufladbaren Batterie größer ist als ein bestimmter Druck, ausgebildet ist.

10. Wiederaufladbare Batterie nach einem der vorstehenden Ansprüche, wobei die zweite Kurzschlussplatte (262) aufweist:
eine Öffnung (262a); und
einen sich zur dritten Kurzschlussplatte (63) hin erstreckenden und von einem Umfang der Öffnung (262a) vorstehenden Vorsprung (262b).

11. Wiederaufladbare Batterie nach Anspruch 10, wobei die dritte Kurzschlussplatte (63) eine der zweiten Kurzschlussplatte (62) zugewandte flache Fläche aufweist.

12. Wiederaufladbare Batterie nach einem der Ansprüche 1 bis 10, wobei die dritte Kurzschlussplatte (163) eine zum Kontaktieren der zweiten Kurzschlussplatte (62, 262) ausgebildete Abschrägung (163a) aufweist.

13. Wiederaufladbare Batterie nach Anspruch 11 oder 12, wobei der Vorsprung (262b) der zweiten Kurzschlussplatte (262) zum Kontaktieren der dritten Kurzschlussplatte (63) oder der Abschrägung (163a) der dritten Kurzschlussplatte (163) aufgrund einer Bewegung der ersten Kurzschlussplatte (61), wenn ein Innendruck derwiederaufladbaren Batterie größer ist als ein bestimmter Druck, ausgebildet ist.

14. Wiederaufladbare Batterie nach einem der vorstehenden Ansprüche, wobei die dritte Kurzschlussplatte (63, 163) eine Dicke aufweist, die größer ist als eine Dicke der ersten Kurzschlussplatte (61).

## Revendications

1. Batterie rechargeable (100), comprenant :
un ensemble d'électrodes (10) ;
un boîtier (40) renfermant l'ensemble d'électrodes (10) ;
un ensemble de capuchon (50) comprenant une plaque de capuchon (51) qui scelle étanchement le boîtier (40) et qui comporte une ouverture (51c) ; et
un élément de court-circuit (60) comprenant une première plaque de court-circuit (61) s'étendant en travers de l'ouverture (51c), une deuxième plaque de court-circuit (62) espacée de la plaque de capuchon (51) et recouvrant l'ouverture (51c), et une troisième plaque de court-circuit (63) entre la première plaque de court-circuit (61) et la deuxième plaque de court-circuit (62),
dans laquelle la troisième plaque de court-circuit (63) est espacée de la deuxième plaque de court-circuit (62).

2. Batterie rechargeable selon la revendication 1, dans laquelle une première extrémité de la troisième plaque de court-circuit (63) est couplée à la plaque de capuchon (51) à proximité de l'ouverture (51c), et dans laquelle une deuxième extrémité de la troisième plaque de court-circuit (63) est espacée de la plaque de capuchon (51).

3. Batterie rechargeable selon l'une des revendications précédentes, dans laquelle la troisième plaque de court-circuit (63) est configurée de façon à venir en contact avec la deuxième plaque de court-circuit (62) du fait du mouvement de la première plaque de court-circuit (61) lorsqu'une pression intérieure de la batterie rechargeable est supérieure à une pression déterminée.

4. Batterie rechargeable selon l'une des revendications précédentes, dans laquelle la première plaque de court-circuit (61) comprend une plaque réversible (61a) qui comporte une partie convexe faisant saillie vers l'ensemble d'électrodes (10) et une partie de bord (61 b) fixée à la plaque de capuchon (51).

5. Batterie rechargeable selon l'une des revendications précédentes, dans laquelle une surface de la plaque de capuchon (51) définissant l'ouverture (51c) est étagée, et un diamètre de l'ouverture (51c) augmente dans une direction s'éloignant de l'ensemble d'électrodes (10).

6. Batterie rechargeable selon la revendication 5, dans laquelle la surface de la plaque de capuchon (51) comporte un premier épaulement (SS1), un deuxième épaulement (SS2) et un troisième épaulement (SS3), dans cet ordre dans une direction s'éloignant de l'ensemble d'électrodes (10), la première plaque de court-circuit (61) étant fixée au premier épaulement (SS1), et la troisième plaque de court-circuit (63) étant fixée au deuxième épaulement (SS2).

7. Batterie rechargeable selon l'une des revendications précédentes, comprenant de plus un élément d'isolement supérieur (59a) disposé entre la deuxième plaque de court-circuit (62) et la plaque de capuchon (51), l'élément d'isolement supérieur (59a) comportant une ouverture dont l'emplacement correspond globalement à l'ouverture (51c) sur la plaque de capuchon (51).

8. Batterie rechargeable selon l'une des revendications précédentes, dans laquelle la deuxième plaque de court-circuit (62) et la troisième plaque de court-circuit (63) comportent des surfaces plates qui se font mutuellement face.

9. Batterie rechargeable selon la revendication 8, dans laquelle la troisième plaque de court-circuit (63) est configurée de façon à venir en contact avec la deuxième plaque de court-circuit (62) du fait du mouvement de la première plaque de court-circuit (61) lorsqu'une pression intérieure de la batterie rechargeable est supérieure à une pression déterminée.

10. Batterie rechargeable selon l'une des revendications précédentes, dans laquelle la deuxième plaque de court-circuit (262) comprend :
une ouverture (262a) ; et
une saillie (262b) s'étendant vers la troisième plaque de court-circuit (63) et faisant saillie à partir d'une périphérie de l'ouverture (262a).

11. Batterie rechargeable selon la revendication 10, dans laquelle la troisième plaque de court-circuit (63) comporte une surface plate faisant face à la deuxième plaque de court-circuit (62).

12. Batterie rechargeable selon l'une des revendications 1 à 10, dans laquelle la troisième plaque de court-circuit (163) comporte un chanfrein (163a) adapté de façon à venir en contact avec la deuxième plaque de court-circuit (62, 262).

13. Batterie rechargeable selon la revendication 11 ou 12, dans laquelle la saillie (262b) de la deuxième plaque de court-circuit (262) est configurée de façon à venir en contact avec la troisième plaque de court-circuit (63) ou le chanfrein (163a) de la troisième plaque de court-circuit (163) du fait du mouvement de la première plaque de court-circuit (61) lorsqu'une pression intérieure de la batterie rechargeable est supérieure à une pression déterminée.

14. Batterie rechargeable selon l'une des revendications précédentes, dans laquelle la troisième plaque de court-circuit (63, 163) a une épaisseur qui est supérieure à une épaisseur de la première plaque de court-circuit (61).
